Europäisches Patentamt

(19) European Patent Office

Office européen des brevets

(11) Publication number: **0 037 942**

**B1**

(12) # EUROPEAN PATENT SPECIFICATION

(45) Date of publication of patent specification: **04.06.86**

(21) Application number: **81102333.2**

(22) Date of filing: **27.03.81**

(51) Int. Cl.⁴: **C 08 J 5/10,** C 08 L 21/00, B 60 C 1/00

(54) **Cured rubber skim stock compositions having improved metal adhesion and metal adhesion retention.**

(30) Priority: **16.04.80 US 140918**

(43) Date of publication of application:
**21.10.81 Bulletin 81/42**

(45) Publication of the grant of the patent:
**04.06.86 Bulletin 86/23**

(84) Designated Contracting States:
**AT BE DE FR GB IT LU SE**

(56) References cited:
**FR-A-1 545 734
GB-A- 993 045
GB-A-1 389 800
US-A-2 912 355**

(73) Proprietor: **THE FIRESTONE TIRE & RUBBER COMPANY
1200 Firestone Parkway
Akron, Ohio 44317 (US)**

(72) Inventor: **Davis, James A.
10688 Mogadore Road
Uniontown Ohio 44685 (US)**
Inventor: **Kang, Jung W.
6150 Terrace Hills Drive
Clinton, Ohio 44216 (US)**
Inventor: **Koch, Robert C.
1121 Merriman Road
Akron Ohio 44313 (US)**

(74) Representative: **Kraus, Walter, Dr. et al
Patentanwälte Kraus, Weisert & Partner
Thomas-Wimmer-Ring 15
D-8000 München 22 (DE)**

Courier Press, Leamington Spa, England.

# 0 037 942

## Description

The present invention relates to a cured rubber skim stock composition containing a metal salt additive and having improved metal adhesion and metal adhesion retention properties for use with a metallic reinforcing cord selected from the group steel cord, brass-plated steel cord and zinc-plated steel cord, and a tire having reinforcing elements comprising such a skim stock composition. Generally the present invention is directed toward improvements in the adhesion and adhesion retention between a rubber skim stock composition, used in the manufacture of tires, conveyor belts, hoses and the like, and metallic reinforcement cord such as steel wire and cable which commonly carries a protective coating of zinc or brass.

In the manufacture of the foregoing rubber articles, particularly steel-belted bias and radial tires, it has become common to reinforce the rubber skim stock material with steel wire or cable. The metallic reinforced rubber is employed as a belt, one or more of which is circumferentially oriented beneath the tread stock to maintain the integrity and shape of the tire during inflation and subsequent load. In order for the belt to function effectively, it is imperative that adhesion between the rubber and the steel cord be effectively maintained. Because steel is prone to oxidation, which even in minor degree is highly deleterious to the necessary adhesion with the rubber skim stock, and it would be most impractical to incorporate a chemically clean, oxidation-free steel cord in the belt at the time of its manufacture, the steel cord is plated with zinc or brass thereby protecting it from oxidation until it can be used.

While adhesion between zinc or brass-plated steel cord and rubber is generally far greater than that between the latter and oxidized steel, existing data determined from article life as well as modern testing techniques indicates that adhesion obtained between plated steel cord and the elastomer must be increased for improved article life and service. Adhesion must also be improved between the rubber skim stock and bright steel, *i.e.,* surfaces of the cord which are neither plated nor oxidized, generally occurring when the steel cords and rubber skim stock are cut to size from larger, calendered sheets of the reinforced rubber stock.

In order to promote adhesion between rubber and ferrous metals it is known to employ a variety of metallic salts as coatings to the metal or as an ingredient in a rubber composition.

US—A—1,919,718 discloses a composite rubber product that adheres to ferrous metals. This technology requires the coating of the metal with a metallic salt such as that formed with copper, cobalt, manganese, iron or lead and a fatty acid of high molecular weight, *e.g.,* stearic, palmitic, oleic, linoleic, lauric and the like. Alternatively, the metallic salt may be dissolved in a solvent or in a rubber cement which is then applied to the metal surface. The rubber layer is then applied and vulcanized in position.

US—A—2,643,273 discloses a rubber adhesive composition which contains a water soluble cobalt salt to increase the adherence of rubber to metal. The specification discloses incorporating cobalt chloride or sulfate in the rubber or dipping the metal in a solution of the salt.

US—A—2,912,355 is directed toward improving the adhesion between rubber and metal by the incorporation into a rubber composition of a partially oxidized metal salt of an aliphatic fatty acid compound, the metal being cobalt, copper, iron, lead, mercury, nickel or silver.

US—A—3,897,583 is directed toward the adhesion of metal to rubber by incorporating a cobalt salt in a rubber stock which contains an adhesive resin forming system based on a methylene donor which is a methylolated nitroalkane in combination with a resorcinol type methylene acceptor. Cobalt salts disclosed include those of aliphatic or alicyclic carboxylic acids having 6—30 carbon atoms.

US—A—3,903,026 discloses a rubber composition containing cobalt carboxylate and magnesium oxide to improve the adhesion of the rubber to zinc or zinc alloy plated steel.

US—A—3,936,536 discloses the method of adhering rubber to metal by coating the metal with rubber containing a small amount of $Co(NH_3)_2 \cdot Cl_2$.

US—A—3,993,847 discloses a process of bonding a rubber to a ferrous metal and such a laminated article. Adhesion is improved by employing an adhesive comprising a conjugated diene and a heterocyclic nitrogen base and containing about 5—180 parts of silica filler per 100 parts of the diene-heterocyclic nitrogen interpolymer. The patent states that adhesion is further improved by using a rubber containing small amounts of cobalt metal.

GB—A—1,389,800 discloses that the adhesion of metal to cured rubber can be improved by adding to the rubber a combination of a cobalt and a nickel salt of an organic acid with a 2,6-dimethylol-4-alkylphenol.

On the other hand, it is known from US—A—2,912,355 that mixtures of partially oxidized fatty acid salts of cobalt and nickel improve the adhesion of rubber to metal.

It is therefore the object of the present invention to provide a rubber skim stock exhibiting better humidity aged adhesion and adhesion retention with metallic reinforcement selected from steel, brass-plated and zinc-plated steel.

According to the invention, this object is achieved by a curable rubber skim stock composition as described above containing

100 parts of a vulcanizable rubber stock;

from 0.25 to 5.50 parts by weight of a salt of cobalt with an aliphatic fatty acid having 2 to 20 carbon atoms per 100 parts of the rubber component in said rubber stock; and

from 0.50 to 12.0 parts by weight of a salt of nickel with an aliphatic fatty acid having 2 to 20 carbon atoms per 100 parts of the rubber component in said rubber skim stock.

The invention also provides a tire having improved adhesion and adhesion retention between the rubber and steel reinforcing elements embedded therein in which the skim stock composition contains

100 parts of a vulcanizable rubber stock;

from 0.25 to 5.50 parts by weight of a salt of cobalt with an aliphatic fatty acid having 2 to 20 carbon atoms per 100 parts of the rubber component in said rubber stock; and

from 0.50 to 12.0 parts by weight of a salt of nickel with an aliphatic fatty acid having 2 to 20 carbon atoms per 100 parts of the rubber component in said rubber skim stock.

In the practice of the present invention certain organic cobalt and organic nickel salts are mixed with a rubber skim stock which is, in turn, subsequently reinforced with metallic cords.

The rubber skim stock composition of the invention exhibits enhanced adhesion and adhesion retention with metallic reinforcement such as steel, plated with brass or zinc or unplated, and comprises a vulcanizable rubber skim stock having an organic salt of cobalt in an amount of from 0.25 to 5.50 parts by weight, with 0.50 to 2.50 being preferred, and an organic salt of nickel in an amount of from 0.50 to 12.0 parts by weight, with 1.0 to 4.8 being preferred. Both additives are present in parts per hundred parts of rubber (phr) based upon the weight of the elastomer in the rubber skim stock.

To illustrate the invention, a typical rubber skim stock is presented hereinbelow which is suitable for preparation of rubber articles such as tires. Adhesion between this stock with steel reinforcement subsequent to vulcanization has been measured and is also presented hereinbelow. It is to be understood that the composition of the rubber skim stock provided is not part of the present invention and that it has been presented solely to enable those skilled in the art to have at least one rubber skim stock with which to practice the invention.

The ingredients utilized in the practice of the present invention are salts of cobalt and nickel with aliphatic fatty acids having from two to about 20 carbon atoms. The salts are prepared by the combination of the metal hydrate and the fatty acid. Suitable aliphatic fatty acids used to practice the present invention would be preferably, *i.e.,* acetic, propionic, butyric, valeric, undecanoic, lauric, palmitic, stearic, nonadecanoic and the like.

Particularly useful as the cobalt salt is cobalt propionate preferred from propionic acid and cobalt hydroxide. Cobalt propionate, as used in the experimental work discussed hereinbelow, is a purple powder having about 29% cobalt and a specific gravity of $1.68\pm0.1$ at 25°C. Particularly useful as the nickel salt is nickel octoate prepared from octanoic acid and nickel hydrate. Nickel octoate, as used in the experimental work discussed hereinbelow, is a viscous green liquid having 12% nickel and a specific gravity of 1.10 at 25°C.

Amounts of the cobalt salt employed can range from 0.25 to 5.50 parts per hundred parts of rubber (phr) with 0.80 parts phr being preferred. Similarly, the amount of nickel salt employed can range from 0.50 to 12.0 parts phr with 3.20 parts phr being preferred. Other cobalt or nickel salts of the foregoing fatty acids can be employed in substantially the same amounts.

In order to determine the improvement in adhesion obtained when the cobalt and nickel salts are added to the rubber skim stock, T-adhesion tests (rubber-to-steel cord) were conducted according to the procedure which follows.

The test utilized T-adhesion pads prepared by placing 1.52 mm slabs of uncured fully compounded rubber skim stock on 1.30 mm fabric reinforced rubber backing. Commercial brass-coated cables (1×5×0.25 mm diam.) were placed between two pads of the reinforced skim stock with the wires in contact with the uncured rubber skim at 1.25 cm intervals. The width of each adhesion pad was 1.25 cm. The pads were placed in a curing mold and were cured for 30 minutes at 149°C. Testing was done on a Model 1130 Instron Universal Tester at a crosshead speed of 25.4 cm per minute and 110°C. The T-adhesion pads were preheated in the 110°C oven for 20 minutes prior to testing. Oven aging of the cured T-adhesion pads was done in a forced air oven at 121°C for two days. Steam bomb aging of the cured samples was done in a pressure tight bomb for one hour at 149°C, in a saturated steam atmosphere.

Detailed T-adhesion test procedure

1. Using a Clicker machine and a 15.24×1.25 cm die, prepare an adequate number of calendered and control stock samples of T-adhesion pad building.
2. Use one piece of calendered fabric reinforced rubber backing (0.1295 cm).
3. Ply one piece of 60 gauge control rubber stock (0.1524 cm) onto the fabric backing.
4. Place sample in building jig with fabric side down.
5. Place ten cords (of brass or zinc coated wire) approximately 17.78 cm in length equally spaced on top of the two piece assembly.
6. Invert another 2 ply assembly, made as in items 1, 2 and 3, on top of cords so that cords are between the 2 layers of rubber skim stock to be tested.
7. This assembly should now fit snugly into the cavity of the curing mold.
8. Adhesion pads shall be cured for 30 minutes at 149°C and then allowed to equilibrate for 24 hours before testing.
9. Testing machine: Model 1130 Instron Universal Tester.

3

# 0 037 942

10. Test speed 25.4 cm/minute; testing temperature, 110°C after 20 minutes preheat.
11. The top grip shall be of a special holder made for the cured sample, with a slot in the bottom to permit the sample to be inserted with the wires protruding. The bottom grip should be a wedge type, designed to exert increasing tightening as each wire is pulled from the cured sample.
12. Record 10 wire pull-outs and average. Multiply average pull-out force value by 0.3572 to obtain kilograms per centimeter.

In the tests which follow, a rubber skim stock, Stock A, was prepared to which the ingredients of the present invention were added in varying amounts. Formulations for each are as follows with all parts given on the basis of parts per hundred parts of rubber (phr) by weight unless otherwise specified.

| Compounding ingredients | Stock A |
| --- | --- |
| Natural rubber | 100 |
| HAF carbon black | 60 |
| Zinc oxide | 7.5 |
| Stearic acid | 0.5 |
| Hydrocarbon resins | 2.0 |
| Ajone DD (trademark)[*1] | 2.0 |
| NOBS special (trademark)[*2] | 0.8 |
| Santoflex 13 (trademark)[*3] | 1.0 |
| Process oil (trademark)[*4] | 2.0 |
| Sulfur MB (trademark)[*5] | 7.5 |
| Santogard PVI | 0.4 |

[*1] 6-dodecyl-1,2-dihydro-2,2,4-trimethylquinoline
[*2] N-oxydiethylene benzothiazole 2-sulfenamide
[*3] N-(1,3 dimethylbutyl)-N'-phenyl-p-phenylenediamine
[*4] 80% insoluble sulfur and 20% process oil
[*5] N-(cyclohexylthiol)phthalimide

In the tests which follow, cobalt propionate and nickel octoate were added to Stock A in amounts ranging from 0.81 to 1.62 parts phr of the cobalt salt and from 1.985 to 3.97 parts phr of the nickel salt. A control was also provided consisting of Stock A alone without the adhesion promoting additives of the present invention.

Five sets of tests were conducted for the Control and Examples 1—4 and these are reported in Table I. The tests included T-adhesion determination for vulcanized specimens—unaged or unconditioned, Test A; oven aged, Test B; and, steam bomb aged, Test C. The force necessary to pull or remove the metallic reinforcement from the vulcanized rubber skim stock is given first, in kg/cm, followed by the percent of rubber skim stock remaining on the surface of the metallic reinforcement. The amount of rubber skim stock remaining on the metallic reinforcement was determined by visual examination and has been reported as % rubber coverage.

4

TABLE I
Effects of different levels of cobalt and nickel in Stock A

|  | Control | Ex. 1 | Ex. 2 | Ex. 3 | Ex. 4 |
|---|---|---|---|---|---|
| Cobalt propionate, phr | — | 1.62 | 1.62 | 0.81 | 0.81 |
| Nickel octoate, phr | — | 3.97 | 1.985 | 3.97 | 1.985 |
| Test A<br>Unaged or unconditioned |  |  |  |  |  |
| Plated steel cord[a] |  |  |  |  |  |
| Brass-plated |  |  |  |  |  |
| kg/cm | 26.36 | 26.29 | 26.36 | 31.61 | 30.79 |
| % rubber coverage | 70 | 90 | 80—85 | 95 | 95 |
| Zinc-plated |  |  |  |  |  |
| kg/cm | 2.95 | 30.25 | 31.11 | 31.93 | 30.75 |
| % rubber coverage | 0 | 95 | 95 | 80—85 | 95 |
| Test B<br>Oven aged plated steel cord[b] |  |  |  |  |  |
| Brass-plated |  |  |  |  |  |
| kg/cm | 15.64 | 14.18 | 19.29 | 19.25 | 19.75 |
| % rubber coverage | 90—95 | 80 | 85—90 | 90 | 100 |
| Zinc-plated |  |  |  |  |  |
| kg/cm | 3.00 | 18.57 | 17.29 | 19.72 | 17.04 |
| % rubber coverage | 0 | 90 | 85 | 90 | 80 |
| Test C<br>Steam bomb aged plated |  |  |  |  |  |
| Steel cord[c] |  |  |  |  |  |
| Brass-plated |  |  |  |  |  |
| kg/cm | 29.11 | 9.11 | 18.61 | 12.29 | 12.93 |
| % rubber coverage | 95 | 5 | 30 | 15 | 15—20 |
| Zinc-plated |  |  |  |  |  |
| kg/cm | 3.21 | 18.97 | 22.32 | 19.72 | 19.61 |
| % rubber coverage | 0 | 60—65 | 75—80 | 70 | 60—65 |

[a] T-adhesion pads cured 30 minutes at 149°C and tested at 110°C.
[b] T-adhesion pads cured 30 minutes at 149°C, heat aged in a forced air oven for 2 days at 121°C and tested at 110°C.
[c] T-adhesion pads cured 30 minutes at 149°C, steam bomb aged 1 hour at 149°C and tested at 110°C.

As can be determined from Table I, Test A, adhesion of the control stock to brass-plated steel cord was significantly better than to zinc-plated steel cord. The addition of the cobalt and nickel salts greatly

**0 037 942**

improved adhesion in all examples with the zinc-plated cord and were best with brass-plated cord for Examples 3 and 4 which contained greater amounts of the nickel salt than the cobalt.

In Test B, oven aging, adhesion of the stocks with the zinc-plated wire was again comparable to the adhesion with the brass-plated wire after the cobalt and nickel salts were incorporated, whereas with the control stocks, adhesion to the zinc-plated wire was quite inferior to the adhesion with the brass-plated wire. The oven aging test is an accelerated heat aging test and is significant in determining the effect of heat on the thermal stability of the chemical bonds formed between the rubber skim stock and the metallic reinforcement during vulcanization.

In Test C, steam bomb aging, adhesion of the stocks of Examples 1—4 with zinc-plated wire was significantly better than the values obtained with the brass-plated wire. Steam bomb aging for one hour at 149°C is an accelerated humidity aging test and is significant in determining the chemical stability of the chemical bonds formed between the rubber skim stock and the metallic reinforcement when exposed to moisture or steam under pressure.

In the second series of tests, reported in Table II, the effect of long term humidity chamber aging is presented for periods of time of 0—210 days between the control, Stock A and Examples 1—4, with brass-plated steel cord.

TABLE II
Effects of different levels of cobalt and nickel in Stock A

|  | Control | Ex. 1 | Ex. 2 | Ex. 3 | Ex. 4 |
| --- | --- | --- | --- | --- | --- |
| **Test D** 0 Day humidity chamber test |  |  |  |  |  |
| Brass-plated steel cord[d] |  |  |  |  |  |
| kg/cm | 23.39 | 23.40 | 27.33 | 32.15 | 27.51 |
| % rubber coverage | 60 | 65 | 90 | 100 | 100 |
| **Test E** 30 Day humidity chamber test |  |  |  |  |  |
| Brass-plated steel cord[d] |  |  |  |  |  |
| kg/cm | 25.71 | 20.36 | 24.11 | 31.43 | 28.45 |
| % rubber coverage | 65—70 | 60 | 75 | 90—95 | 95 |
| **Test F** 60 Day humidity chamber test |  |  |  |  |  |
| Brass-plated steel cord[d] |  |  |  |  |  |
| kg/cm | 23.93 | 21.25 | 22.36 | 24.47 | 23.40 |
| % rubber coverage | 65 | 75—80 | 85 | 90—95 | 90—95 |
| **Test G** 90 Day humidity chamber test |  |  |  |  |  |
| Brass-plated steel cord[d] |  |  |  |  |  |
| kg/cm | 18.86 | 18.65 | 23.58 | 17.86 | 19.57 |
| % rubber coverage | 65 | 75 | 75 | 70—75 | 80—85 |
| **Test H** 120 Day humidity chamber test |  |  |  |  |  |
| Brass-plated steel cord[d] |  |  |  |  |  |
| kg/cm | 21.14 | 18.79 | 19.11 | 19.15 | 19.04 |
| % rubber coverage | 60—65 | 80 | 75—80 | 90 | 80—85 |

6

# 0 037 942

## TABLE II (contd.)
### Effects of different levels of cobalt and nickel in Stock A

| | Control | Ex. 1 | Ex. 2 | Ex. 3 | Ex. 4 |
|---|---|---|---|---|---|
| **Test I** | | | | | |
| 150 Day humidity chamber test | | | | | |
| Brass-plated steel cord[d] | | | | | |
| kg/cm | 19.32 | 17.15 | 20.36 | 20.54 | 20.86 |
| % rubber coverage | 35 | 50—55 | 70—75 | 80 | 85 |
| **Test J** | | | | | |
| 180 Day humidity chamber test | | | | | |
| Brass-plated steel cord[d] | | | | | |
| kg/cm | 17.96 | 13.04 | 17.82 | 16.29 | 18.18 |
| % rubber coverage | 30 | 40 | 65—70 | 80 | 85 |
| **Test K** | | | | | |
| 210 Day humidity chamber test | | | | | |
| Brass-plated steel cord[d] | | | | | |
| kg/cm | 17.32 | 13.25 | 18.97 | 18.43 | 16.36 |
| % rubber coverage | 30 | 25 | 75 | 70 | 80 |
| % coverage retention | 50.0 | 38.5 | 83.3 | 70.0 | 80.0 |

[d] T-adhesion pads cured 30 minutes at 149°C, aged in humidity chamber at 90% relative humidity and 35°C and tested at 110°C.

Tests D through K, representing the effect of humidity chamber aging, show that the control Stock A gradually lost adhesive properties with aging. The effect of humidity aging was somewhat minimized for the stocks of Examples 2—4 which had particularly high percent rubber coverage retention after 210 days when compared to the control. Significance of the humidity chamber tests is again in determining the chemical stability of chemical bonds formed between the rubber skim stock and the metallic reinforcement when exposed to conditions of high relative humidity and high temperature, as compared to ambient, and extended periods of time.

Based on the foregoing results reported in Tables I and II, we consider the presence of cobalt propionate and nickel octoate in a rubber skim stock to be effective in promoting adhesion between the rubber skim stock and metallic reinforcement. As stated hereinabove, the wire coated in the practice of our invention can be, for example, brass-plated wire, i.e., 70% Cu, 30% Zn; zinc-plated or bright steel. The wire can be in the form of a strand, mat, web, ply or braid.

The present invention also finds utility in, for example, brassed metal-rubber articles such as motor mounts, cutless bearings, torsilastic springs, power belts, printing rolls, metal wire reinforced or braided hose, electrical deicers, shoe heels and wherever it is desired to secure rubber to metal or provide a flexible and strong, thermally stable bond between the same.

## Claims

1. A curable rubber skim stock composition containing a metal salt additive and having improved metal adhesion and metal adhesion retention properties after curing, for use with a metallic reinforcing cord selected from the group steel cord, brass-plated steel cord and zinc-plated steel cord, characterized by the fact that the composition comprises
100 parts of a vulcanizable rubber stock;
from 0.25 to 5.50 parts by weight of a salt of cobalt with an aliphatic fatty acid having 2 to 20 carbon atoms per 100 parts of the rubber component in said rubber stock; and
from 0.50 to 12.0 parts by weight of a salt of nickel with an aliphatic fatty acid having 2 to 20 carbon atoms per 100 parts of the rubber component in said rubber skim stock.

2. The curable rubber skim stock composition as set forth in claim 1 wherein the cobalt salt is cobalt propionate.

3. The curable rubber skim stock composition as set forth in claim 1 wherein said nickel salt is nickel octoate.

4. A tire having metallic reinforcing elements selected from the group steel cord, brass-plated steel cord and zinc-plated steel cord, embedded in a vulcanized metal salt additive-containing rubber skim stock characterized by the fact that the skim stock composition comprises

100 parts of a vulcanizable rubber stock;

from 0.25 to 5.50 parts by weight of a salt of cobalt with an aliphatic fatty acid having 2 to 20 carbon atoms per 100 parts of the rubber component in said rubber stock; and

from 0.50 to 12.0 parts by weight of a salt of nickel with an aliphatic fatty acid having 2 to 20 carbon atoms per 100 parts of the rubber component in said rubber skim stock.

5. A tire as set forth in claim 4 wherein said cobalt salt is cobalt propionate.

6. A tire as set forth in claim 4 wherein said nickel salt is nickel octoate.

**Patentansprüche**

1. Vulkanisierbare Skim-Gummimischung, welche ein Metallsalzadditiv enthält und verbesserte Metallanhaftungs- und Metallanhaftungsretentionseigenschaften nach dem Vulkanisieren besitzt, zur Verwendung mit einem metallischen Verstärkungscord, ausgewählt aus der Gruppe Stahlcord, messingplattierter Stahlcord und zinkplattierter Stahlcord, dadurch gekennzeichnet, daß sie folgendes enthält:

100 Teile einer vulkanisierbaren Gummimischung;

0,25 bis 5,50 Gewichtsteile eines Salzes von Kobalt mit einer aliphatischen Fettsäure mit 2 bis 20 Kohlenstoffatomen pro 100 Teile der Gummikomponente in der genannten Gummimischung; und

0,50 bis 12,0 Gewichtsteile eines Salzes von Nickel mit einer aliphatischen Fettsäure mit 2 bis 20 Kohlenstoffatomen pro 100 Teile der Gummikomponente in der genannten Gummimischung.

2. Vulkanisierbare Skim-Gummimischung nach Anspruch 1, dadurch gekennzeichnet, daß das Kobaltsalz Kobaltpropionat ist.

3. Vulkanisierbare Skim-Gummimischung nach Anspruch 1, dadurch gekennzeichnet, daß das Nickelsalz Nickeloctoat ist.

4. Reifen mit metallischen Verstärkungselementen, ausgewählt aus der Gruppe Stahlcord, messingplattierter Stahlcord und zinkplattierter Stahlcord, welche in eine vulkanisierte, ein Metallsalzadditiv enthaltende Skim-Gummimischung eingebettet sind, dadurch gekennzeichnet, daß die Skim-Gummimischung folgendes enthält:

100 Teile einer vulkanisierbaren Gummimischung;

0,25 bis 5,50 Gewichtsteile eines Salzes von Kobalt mit einer aliphatischen Fettsäure mit 2 bis 20 Kohlenstoffatomen pro 100 Teile der Gummikomponente in der genannten Gummimischung; und

0,50 bis 12,0 Gewichtsteile eines Salzes von Nickel mit einer aliphatischen Fettsäure mit 2 bis 20 Kohlenstoffatomen pro 100 Teile der Gummikomponente in der genannten Gummimischung.

5. Reifen nach Anspruch 4, dadurch gekennzeichnet, daß das Kobaltsalz Kobaltpropionat ist.

6. Reifen nach Anspruch 4, dadurch gekennzeichnet, daß das Nickelsalz Nickeloctoat ist.

**Revendications**

1. Composition d'un mélange de skim de caoutchouc pouvant cuire contenant, comme additif, un sel métallique et présentant des propriétés améliorées d'adhérence au métal et de maintien de l'adhérence au métal après cuisson, destinée à être utilisée avec un câble métallique de renfort choisi dans le groupe comprenant un câble d'acier, un câble d'acier revêtu de laiton et un câble d'acier revêtu de zinc, caractérisée par le fait que la composition comprend

100 parties d'un mélange de caoutchouc vulcanisable;

0,25 à 5,50 parties en poids d'un sel de cobalt avec un acide gras aliphatique ayant 2 à 20 atomes de carbone pour 100 parties du constituant caoutchouc dans ledit mélange de caoutchouc; et

0,50 à 12,0 parties en poids d'un sel de nickel avec un acide gras aliphatique ayant 2 à 20 atomes de carbone pour 100 parties du constituant caoutchouc dans ledit mélange de skim de caoutchouc.

2. Composition de mélange de skim de caoutchouc pouvant cuire selon la revendication 1, dans laquelle le sel de cobalt est le propionate de cobalt.

3. Composition de mélange de skim de caoutchouc pouvant cuire selon la revendication 1, dans laquelle ledit sel de nickel est l'octoate de nickel.

4. Pneumatique comportant des éléments métalliques de renfort choisis dans le groupe comprenant un câble d'acier, un câble d'acier revêtu de laiton et un câble d'acier revêtu de zinc, noyés dans un mélange vulcanisé de skim de caoutchouc contenant comme additif un sel métallique, caractérisé par le fait que la composition de mélange de skim comprend

100 parties d'un mélange de caoutchouc vulcanisable;

0,25 à 5,50 parties en poids d'un sel de cobalt avec un acide gras aliphatique ayant 2 à 20 atomes de carbone pour 100 parties du constituant caoutchouc dans ledit mélange de caoutchouc; et

**0 037 942**

0,50 à 12,0 parties en poids d'un sel de nickel avec un acide gras aliphatique ayant 2 à 20 atomes de carbone pour 100 parties du constituant caoutchouc dans ledit mélange de skim de caoutchouc.

5. Pneumatique selon la revendication 4, dans lequel ledit sel de cobalt est le propionate de cobalt.

6. Pneumatique selon la revendication 4, dans lequel ledit sel de nickel est l'octoate de nickel.